# EUROPÄISCHE PATENTSCHRIFT

(11) **EP 3 781 430 B1**
(45) Veröffentlichungstag und Bekanntmachung des Hinweises auf die Patenterteilung: **14.12.2022**
(21) Anmeldenummer: 19721221.0
(22) Anmeldetag: 17.04.2019
(51) Int. Cl.: B60L 3/04, B60L 3/00, B60L 58/14, H02J 7/00, H01H 47/22, H01H 47/32, B60R 16/03, H01M 10/42

(54) **BATTERIEMANAGEMENTSYSTEM MIT SCHALTERSTEUERUNG, INSBESONDERE FÜR EIN SCHIENENFAHRZEUG**
BATTERY MANAGEMENT SYSTEM HAVING SWITCH CONTROL, IN PARTICULAR FOR A RAIL VEHICLE
SYSTÈME DE GESTION DE BATTERIE MUNI D'UNE COMMANDE DE COMMUTATEURS, EN PARTICULIER POUR UN VÉHICULE FERROVIAIRE

(30) Priorität: 20.04.2018 DE 102018109594
(43) Veröffentlichungstag der Anmeldung: 24.02.2021
(73) Patentinhaber: PowerTech Converter GmbH, 13507 Berlin (DE); Ellenberger & Poensgen GmbH, D-90518 Altdorf (DE)
(72) Erfinder: THRON, Burkhard, 15712 Königs Wusterhausen, Zernsdorf (DE); NAUMANN, Michael, 90518 Altdorf (DE); BOLTZ, Hans-Joachim, 13507 Berlin (DE); LASKE, Olaf, 13507 Berlin (DE)
(74) Vertreter: Maikowski & Ninnemann Patentanwälte Partnerschaft mbB
(86) Internationale Anmeldenummer: PCT/EP2019/059990
(87) Internationale Veröffentlichungsnummer: WO 2019/202030

(56) Entgegenhaltungen:
- DE-U1-202011 051 972
- DE-U1-202011 051 972

## Beschreibung

Die Erfindung betrifft ein Batteriemanagementsystem insbesondere für ein Schienenfahrzeug nach dem Oberbegriff des Anspruchs 1.

Ein derartiges Batteriemanagementsystem umfasst eine Anlagenbatterie, eine Stromschienenanordnung, einen Batterieschutzschalter zum schaltbaren Verbinden der Anlagenbatterie mit der Stromschienenanordnung und zumindest eine Schalteinrichtung zum schaltbaren Verbinden zumindest einer Verbrauchergruppe mit der Stromschienenanordnung.

Schienenfahrzeuge weisen üblicherweise Anlagenbatterien auf, die als Hilfssysteme zur elektrischen Versorgung dienen, wenn ein elektrisch angetriebenes Schienenfahrzeug gerade nicht mit einer externen Stromversorgung, insbesondere einem Fahrdraht (Oberleitung), verbunden ist, oder wenn bei einem Fahrzeug mit Verbrennungsmotorantrieb keine Energieeinspeisung des elektrischen Bordnetzes erfolgt oder die Ausgangsleistung der vorhandenen Bordnetzumrichter in bestimmten Betriebszuständen nicht ausreicht. Ein Batteriemanagementsystem dient in diesem Zusammenhang zum Überwachen, Steuern und Schalten der Anlagenbatterie. Dazu weist das Batteriemanagementsystem einen Batterieschutzschalter auf, über den die Anlagenbatterie mit der Stromschienenanordnung verbunden werden kann, um dadurch sowie über eine oder mehrere Schalteinrichtungen eine elektrische Versorgung für eine oder mehrere Verbrauchergruppen des Schienenfahrzeugs bereitzustellen.

Anlagenbatterien können beispielsweise als Bleibatterien, zum Beispiel als Gel-Bleibatterien ausgestaltet sein. Bei solchen Anlagenbatterien ist ein Zustand tiefer Entladung (bezeichnet als Tiefentladezustand) zu vermeiden, um eine Beschädigung an der Anlagenbatterie oder auch deren Totalausfall zu verhindern, was erforderlich macht, den Ladezstand der Anlagenbatterie unter Verwendung geeigneter Sensoren zu überwachen, die den Stromfluss und die Stromrichtung der Anlagenbatterie und/oder der Stromschienenanordnung messen, um daraus Rückschlüsse auf den Ladezustand der Batterie zu ziehen. Weil bei üblichen Anordnungen Komponenten eines solchen Batteriemanagementsystems verteilt in einem Schienenfahrzeug angeordnet sind und somit ein erheblicher Verdrahtungsaufwand erforderlich ist, kann eine zuverlässige Messung des Ladezustands gegebenenfalls schwierig und unter Umständen durch Störsignale beeinflusst sein. Zudem weisen solche verteilt angeordneten Komponenten eines Batteriemanagementsystems einen nicht zu vernachlässigenden Platzbedarf in einem Schienenfahrzeug auf.

Aus der DE 38 22 021 C1 ist eine Schaltungsanordnung zur Minimalspannungsüberwachung bekannt, bei der ein einstellbarer Komparator die Batteriespannung misst und beim Unterschreiten einer für den Entladezustand typischen Spannung über ein oder mehrere Schaltglieder die an der Batterie betriebenen Verbraucher abschaltet.

Aus der DE 100 26 835 A1 ist eine als programmierbares Batteriemanagementsystem konzipierte Baugruppe für ein Schienenfahrzeug bekannt, die mit einem Rechnerkern ausgestattet ist.

Für den Betrieb von Batterieschutzschaltern sind in DE 20 2011 051 972 U1 und der WO 2017/093552 A1 Schaltungsanordnungen und Verfahren beschrieben, die den Betrieb von Batterieschutzschaltern mit Zugmagneten in einem weiten Eingangsspannungsbereich und einer dem Schalter angepassten Weg-Zeit-Charakteristik ermöglichen.

Aufgabe der Erfindung ist es, ein Batteriemanagementsystem zur Verfügung zu stellen, das einfach und kompakt aufgebaut sein kann und dabei die zuverlässige, funktionssichere Steuerung des Betreibens einer Anlagenbatterie ermöglicht.

Diese Aufgabe wird durch einen Gegenstand mit den Merkmalen des Anspruchs 1 gelöst.

Demnach weist das Batteriemanagementsystem eine Steuereinrichtung zum Steuern von Schaltvorgängen zum Schalten des Batterieschutzschalters und der zumindest einen Schalteinrichtung und ein Vorschaltgerät zum Erzeugen eines Schaltstroms zum Schalten des Batterieschutzschalters und der zumindest einen Schalteinrichtung auf, wobei die Steuereinrichtung so ausgebildet ist, dass sie dem Vorschaltgerät einen Sollwert für den Schaltstrom zum Schalten des Batterieschutzschalters oder der zumindest einen Schalteinrichtung bereitzustellt.

Die Steuereinrichtung dient dazu, ein Schalten des Batterieschutzschalters und der zumindest einen Schalteinrichtung zu steuern, um die Anlagenbatterie elektrisch mit Verbrauchergruppen zu verbinden oder von den Verbrauchergruppen zu trennen. Das Verbinden der Anlagenbatterie mit der Stromschienenanordnung über den Batterieschutzschalter und außerdem mit einer oder mehreren Verbrauchergruppen über eine oder mehrere Schalteinrichtungen erfolgt somit in einer über die Steuereinrichtung gesteuerten Weise, indem die Steuereinrichtung das Vorschaltgerät zum Erzeugen eines Schaltstroms zum Schalten des Batterieschutzschalters oder der zumindest einen Schalteinrichtung ansteuert. Die Steuereinrichtung ist hierbei dazu ausgebildet, dem Vorschaltgerät einen Sollwert für einen jeweils zu verwendenden Schaltstrom vorzugeben, so daß das Vorschaltgerät den jeweiligen Schaltstrom anhand des vorgegebenen Sollwertes erzeugen und der Schaltstrom somit an den Batterieschutzschalter oder die zumindest eine Schalteinrichtung übertragen werden kann.

Der Batterieschutzschalter und die zumindest eine Schalteinrichtung umfassen vorzugsweise jeweils einen oder mehrere Zugmagnete, die über den durch das Vorschaltgerät erzeugten Schaltstrom bestromt und somit zum mechanischen Schalten des Batterieschutzschalters bzw. der zumindest einen Schalteinrichtung angesteuert werden. Abhängig von der Ausgestaltung des Batterieschutzschalters und der zumindest einen Schalteinrichtung, beispielsweise abhängig von der Anzahl der verwendeten Zugmagneten in dem Batterieschutzschalter oder in der zumindest einen Schalteinrichtung, kann hierbei der erforderliche Schaltstrom variieren. Entsprechend gibt die Steuereinrichtung dem Vorschaltgerät in Abhängigkeit von der anzusteuernden Baugruppe einen Sollwert für den Schaltstrom vor, sodass das Vorschaltgerät anhand des vorgegebenen Sollwerts einen geeigneten Schaltstrom erzeugen und zur Verfügung stellen kann, um den Batterieschutzschalter oder die zumindest eine Schalteinrichtung anzusteuern.

Entsprechend ist die Steuereinrichtung ausgebildet, einen ersten Sollwert ür einen Schaltstrom zum Schalten des Batterieschutzschalters und einen von dem ersten Sollwert unterschiedlichen, zweiten Sollwert für einen Schaltstrom zum Schalten der zumindest einen Schalteinrichtung vorzugeben. Sind mehrere Schalteinrichtungen zum schaltbaren Verbinden mehrerer Verbrauchergruppen mit der Stromschienenanordnung vorgesehen, so können die Sollwerte für die Schalteinrichtungen der unterschiedlichen Verbrauchergruppen gleich oder (abhängig von der konkreten Bauform der Schalteinrichtungen) auch unterschiedlich sein.

Weil die Steuereinrichtung dem Vorschaltgerät Sollwerte zum Einstellen unterschiedlicher Schaltströme zum Schalten des Batterieschutzschalters und einer oder mehrerer Schalteinrichtungen vorgibt, ist im Rahmen des Batteriemanagementsystems ein einziges Vorschaltgerät in Zusammenwirken mit der Steuereinrichtung ausreichend. Ein einziges Vorschaltgerät wird zum Ansteuern des Batterieschutzschalters genauso wie einer oder mehrerer Schalteinrichtungen verwendet, was eine kompakte Bauform des Batteriemanagementsystems beispielsweise in einem einheitlichen Gehäuse ermöglichen kann.

Das Vorschaltgerät weist einen Sollwertsteller zum Einstellen des Schaltstroms in Abhängigkeit von dem von der Steuereinrichtung empfangenen Sollwert auf. Über den Sollwertsteller wird die Größe des erforderlichen Schaltstroms eingestellt, wobei der Sollwertsteller beispielsweise mit einer Leistungsstufe des Vorschaltgeräts zum Erzeugen des jeweils vorgegebenen Schaltstroms zusammenwirken kann. Über die Leistungsstufe wird der jeweils benötigte Schaltstrom erzeugt und abgegeben, um den Batterieschutzschalter oder die zumindest eine Schalteinrichtung in geeigneter Weise abhängig vom durchzuführenden Schaltvorgang zu bestromen.

Die Steuereinrichtung steuert dabei außerdem mehrere Schaltelemente an, welche die Verteilung der von dem einen Vorschaltgerät gelieferten, der jeweiligen Schalteinrichtung angepaßten Schaltströme auf die jeweils anzusteuernden Schalteinrichtungen vornehmen.

Vorzugsweise können diese Schaltelemente, beispielsweise in Form von Relais, innerhalb der Steuereinrichtung angeordnet sein. Die Schaltelemente können ebenso als Halblleiterschaltelemente ausgebildet sein.

In einer vorteilhaften Ausgestaltung sind die Steuereinrichtung, das Vorschaltgerät, der Batterieschutzschalter und die zumindest eine Schalteinrichtung in einem gemeinsamen Gehäuse, auch bezeichnet als Gerätekasten, angeordnet. Die Steuereinrichtung, das Vorschaltgerät, der Batterieschutzschalter und die zumindest eine Schalteinrichtung können somit in kompakter Weise zu einem einheitlichen Gerät miteinander vereint sein, wobei diese Baugruppe vorzugsweise in unmittelbarer räumlicher Nähe zu der Anlagenbatterie und gegebenenfalls auch zu weiteren Komponenten, mit denen die Anlagenbatterie zusammenwirkt (zum Beispiel einem Batterieladegerät), angeordnet ist.

Die räumlich nahe Anordnung der Komponenten des Batteriemanagementsystems zueinander hat den weiteren Vorteil, dass ein Verkabelungsaufwand zum Verbinden der Komponenten miteinander, beispielsweise zum Verbinden der Steuereinrichtung mit dem Batterieschutzschalter, mit der zumindest einen Schalteinrichtung, mit Sensoren und mit anderen Baugruppen einfach gehalten werden kann. Weil eine Verkabelung zudem über kurze Leitungslängen hergestellt werden kann, sind Störeinflüsse beispielsweise auf Sensorsignale reduziert.

Zudem ergibt sich ein reduzierter Bauraumbedarf für das Batteriemanagementsystem, das in kompakter, konzentrierter Weise in einem Schienenfahrzeug angeordnet werden kann.

In einer Ausgestaltung ist die Steuereinrichtung dazu ausgebildet, einen Schaltvorgang zum Schalten des Batterieschutzschalters oder der mindestens einen Schalteinrichtung in Abhängigkeit und unter Berücksichtigung von einem Ladezustand der Anlagenbatterie auszulösen. Das Schalten des Batterieschutzschalters und/oder der zumindest einen Schalteinrichtung zum Zuschalten oder Abschalten einer oder mehrere Verbrauchgruppen erfolgt somit in Abhängigkeit von einem Ladezustand und somit einem Speisevermögen der Anlagenbatterie. Vor dem Schalten des Batterieschutzschalters oder der zumindest einen Schalteinrichtung wird der Ladezustand der Anlagenbatterie, zum Beispiel anhand der an der Anlagenbatterie bereitstehenden Batteriespannung, geprüft, und ein Schaltvorgang zum Beispiel zum Zuschalten einer Verbrauchergruppe wird nur dann eingeleitet, wenn anhand des Ladezustands sichergestellt ist, dass das Speisevermögen der Anlagenbatterie ausreicht, um die jeweilige Verbraucherbaugruppe zu speisen.

Das Schalten des Batterieschutzschalters und/oder der zumindest einen Schalteinrichtung erfolgt somit in Abhängigkeit von einer Prüfung des Ladezustands der Anlagenbatterie. Ist die Batteriespannung beispielsweise kleiner als ein vorbestimmter Grenzwert für die Batteriespannung, so wird hieraus auf ein unzureichendes Speisevermögen der Anlagenbatterie geschlossen und ein Schaltvorgang des Batterieschutzschalters oder der zumindest einen Schalteinrichtung wird nicht eingeleitet.

In einer Ausgestaltung weist das Batteriemanagementsystem einen Batteriestromsensor zum Messen eines Stromflusses zwischen der Anlagenbatterie und der Stromschienenanordnung auf. Unter Verwendung des Batteriestromsensors kann beispielsweise eine Lebensdauerprognose für den Batterieschutzschalter und die zumindest eine Schalteinrichtung errechnet werden, indem die Anzahl der Schaltvorgänge für den Batterieschutzschalter oder die zumindest eine Schalteinrichtung zusammen mit den bei den einzelnen Schaltvorgängen auftretenden Strömen ausgewertet werden. Hierbei kann zusätzlich zu dem Batteriestromsensor auch ein Anlagenstromsensor zur Messung eines Stromflusses an der Stromschienenanordnung mit einbezogen werden, um anhand von über den Batteriestromsensor und den Anlagenstromsensor erhaltenen Messwerten bei Schaltvorgängen darauf zu schließen, welche Lebensdauer für den Batterieschutzschalter und die zumindest eine Schalteinrichtung noch zu erwarten ist.

Die Auswertung kann zum Beispiel anhand einer dem Typs des Batterieschutzschalters oder der zumindest einen Schalteinrichtung zugeordneten Kennlinie erfolgen, die die Lebensdauer (angegeben zum Beispiel als Anzahl der noch zu erwartenden Schaltzyklen) mit dem Strom beim Schalten in Verbindung setzt. Dies beruht auf dem Hintergund, dass häufige Schaltvorgänge bei großem Stromfluss die Lebensdauer des Batterieschutzschalters bzw. der zumindest einen Schalteinrichtung reduzieren, was anhand einer Auswertung der einzelnen Schaltvorgänge und der dabei auftretenden Ströme ausgewertet werden kann.

Eine Lebensdauerprognose kann zudem auch für die Anlagenbatterie unter Einbeziehung der Blockspannung an der Anlagenbatterie, der Elektrolyttemperatur, der Anzahl der Ladezyklen oder von anderen Parametern erstellt werden.

In einer Ausgestaltung ist der Batterieschutzschalter zweipolig zum Schalten von zwei Strompfaden, über die die Anlagenbatterie mit der Stromschienenanordnung verbindbar ist, ausgebildet. Die Stromschienenanordnung weist beispielsweise zwei (der positiven Batteriespannung und der negativen Batteriespannung zugeordnete) Stromschienen auf, die über jeweils einen Strompfad mit der Anlagenbatterie verbindbar sind. Der zweipolig ausgestaltete Batterieschutzschalter dient zum Schalten beider Strompfade, sodass über den Batterieschutzschalter beide Strompfade von der Stromschienenanordnung getrennt bzw. schaltbar mit der Stromschienenanordnung verbunden werden können.

Weil über den Batterieschutzschalter ein Schalten in zwei parallelen Strompfaden erfolgt, kann der Batterieschutzschalter beispielsweise zwei zu bestromende Zugmagnete zum mechanischen Verstellen entsprechender Schalter aufweisen. Entsprechend kann der Batterieschutzschalter einen vergleichsweise großen Schaltstrom zum Schalten erfordern.

Der Batterieschutzschalter kann hierbei bistabil mit zwei stabilen Schaltzuständen ausgebildet sein. Der Batterieschutzschalter kann somit zwischen einem Ein-Zustand, in dem die Strompfade mit der Stromschienenanordnung elektrisch verbunden sind, und einem Aus-Zustand, in dem die Strompfade von der Stromschienenanordnung getrennt sind, geschaltet werden, wobei der Batterieschutzschalter in jedem Schaltzustand in einer stabilen Stellung ist und somit nicht gesondert zum Halten in der gerade eingenommenen Schaltstellung bestromt werden muss.

Die zumindest eine Schalteinrichtung, über die eine oder mehrere Verbrauchergruppen mit der Stromschienenanordnung verbunden werden können, ist beispielsweise einpolig ausgebildet und dient somit zum schaltbaren Verbinden eines (einzigen) Strompfads mit der Stromschienenanordnung. Auch die zumindest eine Schalteinrichtung kann hierbei bistabil mit zwei stabilen Schaltzuständen, also einem Ein-Zustand und einem Aus-Zustand, ausgestaltet sein, sodass die zumindest eine Schalteinrichtung zwischen ihren stabilen Schaltstellungen verstellt werden kann.

Weil die zumindest eine Schalteinrichtung nur einen Strompfad schaltet, kann die zumindest eine Schalteinrichtung beispielsweise lediglich einen Zugmagneten zum mechanischen Schalten eines entsprechenden Schalters aufweisen. Entsprechend kann der Schaltstrom, den die zumindest eine Schalteinrichtung erfordert, gegenüber dem Schaltstrom des Batterieschutzschalters kleiner sein.

Der Batterieschutzschalter und/oder die zumindest eine Schalteinrichtung können beispielsweise jeweils eine thermische und/oder magnetische Sicherungsfunktion aufweisen.

Mittels einer thermischen Sicherungsfunktion wird eine thermische Überhitzung an dem Batterieschutzschalter oder der zumindest einen Schalteinrichtung überwacht und, wenn eine Temperatur an dem Batterieschutzschalter oder der Schalteinrichtung über einen vorgegebenen Grenzwert steigen sollte, eine entsprechende Gegenmaßnahme zum, zum Beispiel ein Abschalten des Batterieschutzschalters oder der Schalteinrichtung, eingeleitet. Eine solche thermische Sicherungsfunktion dient dazu, eine Erhitzung, die aufgrund eines über einen längeren Zeitraum fließenden, (über-) großen Stromflusses auftritt, an dem Batterieschutzschalter oder der Schalteinrichtung zu erkennen, um gegebenenfalls eine Gegenmaßnahme einzuleiten.

Zusätzlich oder alternativ können der Batterieschutzschalter und/oder die zumindest eine Schalteinrichtung eine magnetische Sicherungsfunktion aufweisen. Im Rahmen einer solchen magnetischen Sicherungsfunktion wird ein starker Stromanstieg an dem Batterieschutzschalter oder der zumindest einen Schalteinrichtung und somit eine magnetisch detektierbare, (über-) große Stromänderung erkannt, um bei übermäßigem Stromanstieg eine geeignete Gegenmaßnahme, zum Beispiel ein Abschalten, einzuleiten.

Weil der Batterieschutzschalter und/oder die zumindest eine Schalteinrichtung integrierte Sicherungsfunktionen aufweisen, kann auf zusätzliche Gerätschaften, zum Beispiel eine Schmelzsicherung oder dergleichen, die herkömmlich für eine solche Sicherungsfunktion vorgesehen worden sind, verzichtet werden, was die Bauform vereinfacht und zudem den Bauraumbedarf reduziert.

In einer Ausgestaltung weist das Batteriemanagementsystem ein Batterieladegerät auf, das mit der Stromschienenanordnung verbunden ist und zum Aufladen der Anlagenbatterie dient. Die Steuereinrichtung ist hierbei ausgebildet, das Batterieladegerät in Abhängigkeit eines Ladezustands der Anlagenbatterie zu steuern, sodass abhängig davon, in welchem Ladezustand sich die Anlagenbatterie befindet, die Anlagenbatterie über das Batterieladegerät aufgeladen werden kann.

Die Steuereinrichtung kann hierbei auch dazu ausgestaltet sein, Meldungen zu erzeugen und über zum Beispiel ein Datenbussystem an ein übergeordnetes System abzugeben, sodass beispielsweise einem Zugführer angezeigt werden kann, dass ein Aufladeprozess (sogenannter Ausgleichsladevorgang) der Anlagenbatterie durchgeführt wird. Wird die Anlagenbatterie beispielsweise aus einem Tiefentladezustand wieder aufgeladen, so sollte dies unter Verwendung eines vergleichsweise niedrigen Stroms (bezeichnet als I₂₀, entsprechend einem zwanzigstel des Nennstroms) durchgeführt werden, wobei ein solcher Ausgleichsladevorgang über einen längeren Zeitraum, zum Beispiel über einen Zeitraum zwischen 24 Stunden und 48 Stunden, ununterbrochen durchgeführt werden sollte. Wird dem Zugführer somit angezeigt, dass ein Ausgleichsladevorgang durchgeführt wird, so kann der Zugführer sicherstellen, dass das Schienenfahrzeug über einen erforderlichen Zeitraum an eine externe Stromversorgung, zum Beispiel einen Fahrdraht, angeschlossen ist.

Ein Ausgleichsladevorgang kann durch die Steuereinrichtung in automatischer Weise derart gesteuert werden, dass ein Ausgleichsladevorgang selbsttätig gestartet wird, sobald der Ladezustand der Anlagenbatterie unter einen vorbestimmten Grenzwert fällt. In diesem Fall wird die Anlagenbatterie selbsttätig wieder aufgeladen, bis an der Anlagenbatterie wieder ein hinreichendes Speisevermögen besteht.

In einer Ausgestaltung weist das Batteriemanagementsystem eine mit der Stromschienenanordnung verbundene Energiespeicheranordnung, zum Beispiel in Form einer Kondensatoranordnung zum Beispiel unter Verwendug sogenannter Superkondensatoren, zum Bereitstellen elektrischer Energie in einem Tiefentladezustand der Anlagenbatterie auf. Auch die Energiespeicheranordnung wird über die Steuereinrichtung gesteuert derart, dass in einem Tiefentladezustand der Anlagenbatterie Energie über die Energiespeicheranordnung zur Verfügung gestellt werden kann, um an dem Schienenfahrzeug Grundfunktionen ausführen zu können. Eine solche Energiespeicheranordnung kann insbesondere dann zugeschaltet werden, wenn die Anlagenbatterie in extremer Weise entladen und gegebenenfalls sogar beschädigt ist. In diesem Fall kann anstelle eines Wiederaufladens der Anlagenbatterie die Energiespeicheranordnung zum Beispiel in Form der Kondensatoranordnung zugeschaltet werden, um das Ausführen von Grundfunktionen an einem Schienenfahrzeug zu ermöglichen.

In einer Ausgestaltung weist das Batteriemanagementsystem eine Mehrzahl von Schalteinrichtungen zum schaltbaren Verbinden einer Mehrzahl von Verbrauchergruppen mit der Stromschienenanordnung auf. Unterschiedliche Verbrauchergruppen können hierbei anhand der Priorität der Verbraucher gruppiert sein. Eine erste Verbrauchergruppe kann beispielsweise solche Verbraucher, die zum Bereitstellen von Grundfunktionen an einem Schienenfahrzeug erforderlich sind, umfassen, beispielsweise eine Grundbeleuchtung des Schienenfahrzeugs, Grundfunktionen des Antriebssystems des Schienenfahrzeugs oder eine Türsteuerung des Schienenfahrzeugs. Eine zweite Verbrauchergruppe kann demgegenüber Verbraucher umfassen, die einer erhöhten Komfortstufe zugehörig sind, beispielsweise eine Heizungsbaugruppe oder eine Beleuchtungsbaugruppe für eine Vollbeleuchtung des Schienenfahrzeugs. Eine dritte Verbrauchergruppe kann Verbraucher einer weiter erhöhten Komfortstufe umfassen, beispielsweise Verbraucher in Form eines Klimaanlagesystems oder eines Wechselrichtersystems für Laptopsteckdosen oder dergleichen. Über die Schalteinrichtungen werden diese Verbrauchergruppen getrennt voneinander mit der Stromschienenanordnung verbunden und somit über die Anlagenbatterie abhängig vom Schaltzustand des Batterieschutzschalters und der Schalteinrichtungen gespeist.

Hierbei kann vorteilhaft sein, das Zuschalten und auch das Abschalten der Verbrauchergruppen zeitlich zu staffeln. Das Zuschalten kann hierbei abhängig auch von einem Ladezustand und einem Speisevermögen der Anlagenbatterie gesteuert werden, indem zunächst eine erste Verbrauchergruppe über eine zugeordnete erste Schalteinrichtung, sodann eine zweite Verbrauchergruppe über eine zugeordnete zweite Schalteinrichtung und zeitlich versetzt eine dritte Verbrauchergruppe über eine zugeordnete dritte Schalteinrichtung zugeschaltet wird, jeweils abhängig von einer Prüfung, ob die Anlagenbatterie ein hinreichendes Speisevermögen zum Speisen der Verbrauchergruppen aufweist.

Genauso wie das Zuschalten der Verbrauchergruppen kann auch das Abschalten der Verbrauchergruppen in zeitlich gestaffelter Weise erfolgen, gesteuert über die Steuereinrichtung. So kann beim Abschalten zunächst die dritte Verbrauchergruppe, anschließend die zweite Verbrauchergruppe und danach die erste Verbrauchergruppe jeweils über die zugeordnete Schalteinrichtung abgeschaltet werden.

In einer Ausgestaltung ist die Steuereinrichtung mit einem Busanschluss zum Verbinden der Steuereinrichtung mit einem Datenbussystem eines übergeordneten Systems verbunden. Über einen solchen Busanschluss kann die Steuereinrichtung beispielsweise durch einen Nutzer konfiguriert werden, und es können Systemparameter der Steuereinrichtung abgerufen werden.

Zusätzlich oder alternativ kann die Steuereinrichtung eine Schnittstelle für eine drahtlose Kommunikation zum Herstellen einer drahtlosen Datenverbindung, zum Beispiel in Form einer RFID-Schnittstelle, aufweisen. Über eine solche Schnittstelle können beispielsweise im Betrieb erhaltene Daten der Steuereinrichtung abgerufen und durch einen Nutzer ausgewertet werden.

In einer weiteren Ausgestaltung weist das Batteriemanagementsystem eine Systemverbindungseinrichtung auf, über die eine weitere Steuereinrichtung in kaskadierter Weise mit dem Batteriemanagementsystem verbunden werden kann. Mehrere Steuereinrichtungen können somit kaskadenförmig zusammengeschaltet werden, um den Funktionsumfang des Batteriemanagementsystems zu erweitern, beispielsweise um weitere Schalteinrichtungen an das Batteriemanagementsystem anzuschließen.

Einzelne Steueranschlüsse der Steuereinrichtung können beispielsweise als Infrarotschnittstelle ausgebildet sein, sodass Steuerdaten in Form von Infrarotsignalen von der Steuereinrichtung empfangen und von der Steuereinrichtung auch ausgesandt werden können.

Der der Erfindung zugrunde liegende Gedanke soll nachfolgend anhand der in den Figuren dargestellten Ausführungsbeispiele näher erläutert werden. Es zeigen:
- Fig. 1: eine Ansicht eines Batteriemanagementsystems für ein Schienenfahrzeug;
- Fig. 2: eine Ansicht eines physischen Layouts eines solchen Batteriemanagementsystems;
- Fig. 3: ein Ablaufdiagramm zum Zuschalten von Verbrauchergruppen;
- Fig. 4: ein Ablaufdiagramm zum Abschalten von Verbrauchergruppen; und
- Fig. 5: doppeltlogarithmische Kennlinien von Schalteinrichtungen, darstellend die Anzahl der Schaltvorgänge in Abhängigkeit vom dabei fließenden Strom.

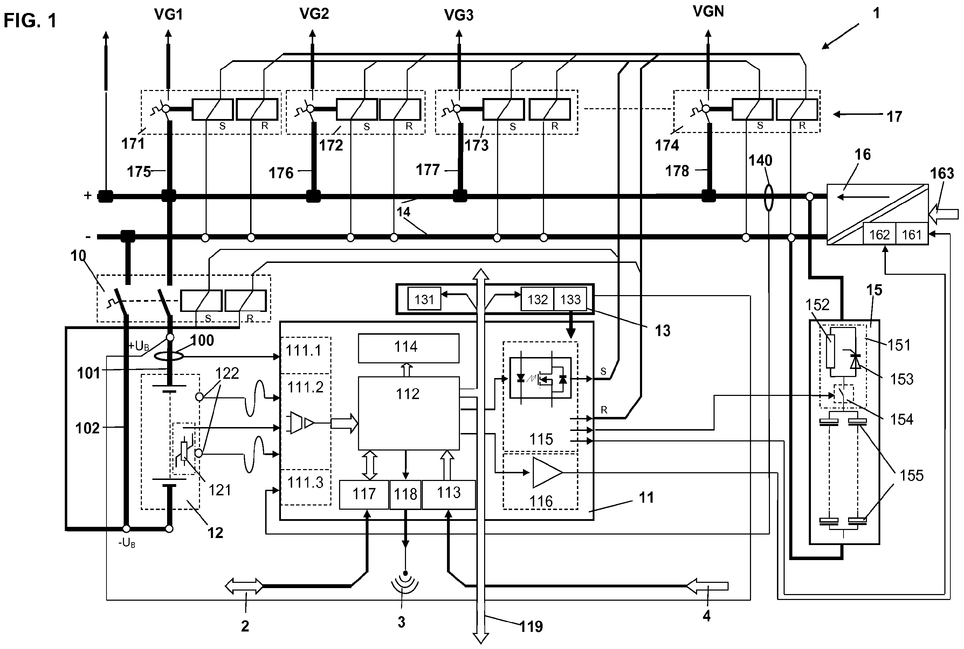

**Fig. 1** zeigt ein Ausführungsbeispiel eines Batteriemanagementsystems 1, das zum Steuern der Zuschaltung und Abschaltung von Verbrauchergruppen VG1, VG2, VG3, VGn an einer Anlagenbatterie 12, beispielsweise einer 110 V Gel-Bleibatterie, und zudem zum Steuern einer Aufladung der Anlagenbatterie 12 über ein Batterieladegerät 16 dient.

Das Batteriemanagementsystem 1 weist eine zentrale Steuereinrichtung 11 auf, die einen Prozessor 112 umfasst und zum Steuern eines Batterieschutzschalters 10 zum Verbinden der Anlagenbatterie 12 mit einer Stromschienenanordnung 14 und zudem zum Steuern von Schalteinrichtungen 171-174 zum Zuschalten und Abschalten der Verbrauchergruppen VG1-VGn an der Stromschienenanordnung 14 dient. Die Steuereinrichtung 11 steht hierzu in Verbindung mit einem Vorschaltgerät 13 und ist zudem verbunden mit dem Batterieladegerät 16 (mit einer Nennleistung von zum Beispiel 25 kW) und einer Energiespeicheranordnung 15 in Form einer Kondensatoranordnung, die zum Bereitstellen von Energie in einem Tiefentladezustand der Anlagenbatterie 12 dient.

Die Steuereinrichtung 11 weist eine Batteriestromerfassung 111.1 zum Erfassen eines Batteriestroms an einem Strompfad 101 der Anlagenbatterie 12 über einen Batteriestromsensor 100, eine Erfassungseinrichtung 111.2 für die Erfassung der Blockspannung über Blockspannungsabgriffe 122 an der Anlagenbatterie 12 und eine Erfassungseinrichtung 111.3 zur Erfassung eines Anlagenstroms über einen Anlagenstromsensor 140 an einer Stromschiene der Stromschienenanordnung 14 auf, die jeweils mit dem Prozessor 112 verbunden sind und Messwerte an den Prozessor 112 zur Auswertung abgeben. Über die Erfassungseinrichtung 111.2 kann hierbei auch eine Betriebstemperatur an der Anlagenbatterie 12, gemessen über einen Batterietemperatursensor 121, erfasst und dem Prozessor 112 zugeführt werden.

Die Steuereinrichtung 11 weist weiter einen Bustreiber 114 zur Verbindung mit einem Bussystem 2 über einen Busanschluss 117 auf. Über eine Drahtlos-Schnittstelle 118, zum Beispiel in Form einer RFID-Schnittstellen, kann eine drahtlose Verbindung 3 mit einem externen Kommunikationsgerät, zum Beispiel unter Verwendung der Nahfeldkommunikationtechnologie, hergestellt werden. Über einen Steuereingang 113 kann die Steuereinrichtung 11 Steuersignale eines externen Steuersystems 4, zum Beispiel eines übergeordneten Systems eines Schienenfahrzeugs, empfangen, um in Abhängigkeit solcher Steuersignale zum Beispiel ein Zuschalten oder Abschalten von Verbrauchergruppen VG1-VGn zu bewirken.

Die Steuereinrichtung 11 weist weiter eine Schaltbaugruppe 115 auf, über die ein Schaltstrom an den Batterieschutzschalter 10 und die Schalteinrichtungen 171-174 abgegeben werden kann, um den Batterieschutzschalter 10 oder die Schalteinrichtungen 171-174 zwischen unterschiedlichen Schaltzuständen zu schalten, insbesondere um die Anlagenbatterie 12 oder eine der Verbrauchergruppen VG1-VGn mit der Stromschienenanordnung 14 zu verbinden oder von der Stromschienenanordnung 14 zu trennen.

Das Vorschaltgerät 13 dient dazu, einen Schaltstrom, der zum Schalten des Batterieschutzschalters 10 und der Schalteinrichtungen 171-174 erforderlich ist, zu erzeugen. Das Vorschaltgerät 13 weist hierzu einen Sollwertsteller 131 auf, der dazu ausgestaltet ist, in Abhängigkeit von einem durch die Steuereinrichtung 11 vorgegebenen Sollwert eine Aktivierungsschaltung 132 und eine Leistungsstufe 133 zum Erzeugen eines Schaltstroms anhand des Sollwerts anzusteuern. Das Vorschaltgerät 13 gibt den so erzeugten Schaltstrom an die Steuereinrichtung 11 ab, die den Schaltstrom über die Schaltbaugruppe 115, ausgebildet durch eine Binärschalteranordnung, dem Batterieschutzschalter 10 oder einer der Schalteinrichtungen 171-174 zuführt und diese somit zwischen unterschiedlichen Schaltzuständen schaltet.

Das Batteriemanagementsystem 1 kann mit einem einzigen Vorschaltgerät 13 auskommen. Das Vorschaltgerät 13 ist hierbei dazu ausgestaltet, abhängig von einem über die Steuereinrichtung 11 vorgegebenen Sollwert den Schaltstrom entsprechend den Erfordernisse der zu schaltenden Baugruppe einzustellen, sodass der Schaltstrom eine Stromstärke aufweist, die zum Schalten des Batterieschutzschalters 10 bzw. der zu schaltenden Schalteinrichtung 171-174 erforderlich ist.

Soll beispielsweise der Batterieschutzschalter 10 geschaltet werden, gibt die Steuereinrichtung 11 dem Vorschaltgerät 13 einen Sollwert für den Schaltstrom vor, der dem erforderlichen Schaltstrom für den Batterieschutzschalter 10 entspricht und der beispielsweise von der Anzahl der Zugmagnete des Batterieschutzschalters 10 zum mechanischen Verstellen der Schalter des Batterieschutzschalters 10 abhängt. Soll demgegenüber eine der Schalteinrichtungen 171-174, die den Verbrauchergruppen VG1-VGn zugeordnet sind, geschaltet werden, wird über die Steuereinrichtung 11 ein Sollwert vorgegeben und durch das Vorschaltgerät 13 anhand des Sollwerts ein Schaltstrom erzeugt, der dem für die Schalteinrichtung 171-174 erforderlichen Schaltstrom entspricht.

Der Batterieschutzschalter 10 - beispielsweise vom Typ vom Typ SBG-437-02-V0171 und ausgelegt für einen Nennstrm von zum Beispiel 240 V - ist, bei dem dargestellten Ausführungsbeispiel, als zweipoliger Schalter ausgebildet, der zum Schalten eines positiven Strompfads 101 und eines negativen Strompfads 102 der Anlagenbatterie 12 dient, sodass über den Batterieschutzschalter 10 beide der Anlagenbatterie 12 zugeordnete Strompfade 101, 102 von der Stromschienenanordnung 14 getrennt werden können. Entsprechend weist der Batterieschutzschalter 10 beispielsweise zwei Zugmagnete zum mechanischen Schalten der den einzelnen Strompfaden 101, 102 zugeordneten mechanischen Schalter auf, die mit einem entsprechend großen Schaltstrom bestromt werden müssen, um den Batterieschutzschalter 10 zwischen einem Ein-Zustand und einem Aus-Zustand zu schalten.

Die Schalteinrichtungen 171-174 - beispielsweise jeweils vom Typ SBG-437-01-V0173 - sind demgegenüber jeweils als einpolige Schalter ausgebildet und schalten in jeweils einem Strompfad 175-178, der der jeweiligen Verbrauchergruppe VG1-VGn zugeordnet ist. Entsprechend weisen die Schalteinrichtungen 171-174 zum Beispiel jeweils nur einen Zugmagneten auf und erfordern einen entsprechend kleineren Schaltstrom.

Sowohl der Batterieschutzschalter 10 als auch die Schalteinrichtungen 171-174 sind vorzugsweise jeweils als bistabiler Schalter mit zwei stabilen Schaltzuständen ausgebildet. Zwischen den stabilen Schaltzuständen können der Batterieschutzschalter 10 und die Schalteinrichtungen 171-174 jeweils umgeschaltet werden.

Der Batterieschutzschalter 10 und die Schalteinrichtung 171-174 können beispielsweise jeweils eine Setzspule ("S") zum Setzen der jeweiligen Zugmagnetanordnung zum Einschalten des Batterieschutzschalters 10 bzw. der Schalteinrichtung 171-174 und eine Rücksetzspule ("R") zum Rücksetzen der Zugmagnetanordnung zum Ausschalten des Batterieschutzschalters 10 bzw. der Schalteinrichtung 171-174 aufweisen.

Die Verbrauchergruppen VG1-VGn können zum Beispiel Verbrauchern unterschiedlicher Komfortstufen entsprechen. So können einer ersten Verbrauchergruppe VG1 - ausgelegt beispielsweise für einen Strom von 40 A - Verbraucher zum Bereitstellen von Grundfunktionen, zum Beispiel eine Notbeleuchtung und eine Türsteuerungsfunktion oder dergleichen, zugeordnet sein. Einer zweiten Verbrauchergruppe VG2 - ausgelegt beispielsweise für einen Strom von 80 A - können demgegenüber Funktionen einer mittleren Komfortstufe, zum Beispiel eine Heizungsfunktion und eine Vollbeleuchtung eines Schienenfahrzeugs, zugeordnet sein. Einer dritten Verbrauchergruppe VG3 - ausgelegt beispielsweise für einen Strom von 100 A - können demgegenüber Funktionen einer höheren Komfortstufe, zum Beispiel eine Klimaanlage oder Wechselrichtersystem für Laptopsteckdosen oder dergleichen, zugeordnet sein. Weitere Verbrauchergruppen VGn können vorhanden sein, wobei das Batteriemanagementsystem 1 grundsätzlich mit beliebig vielen Schalteinrichtungen 171-174 zum Zuschalten und Abschalten unterschiedlicher Verbrauchergruppen VG1-VGn betrieben werden kann.

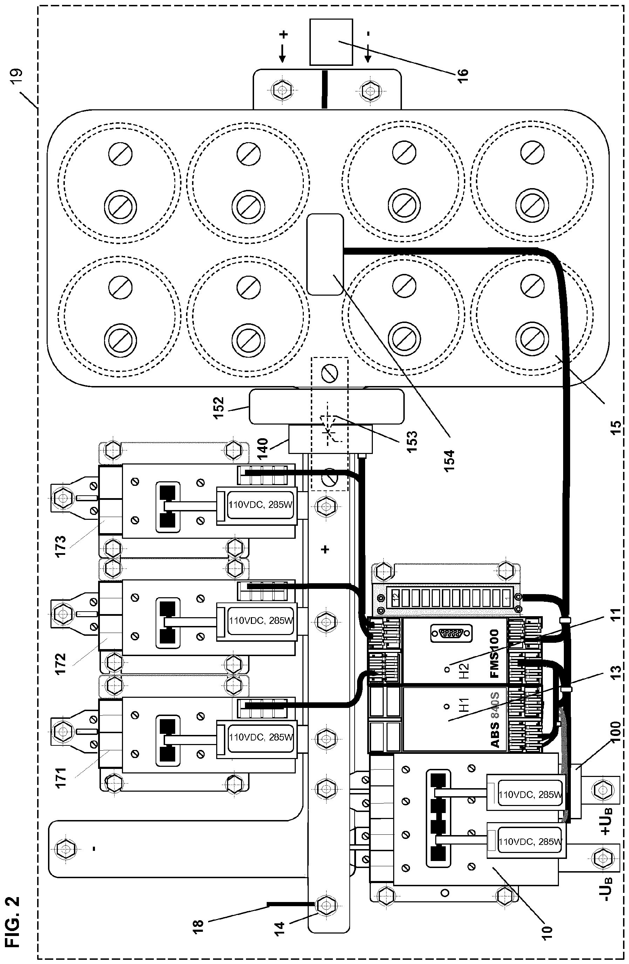

Das Batteriemanagementsystem 1 kann in einer kompakten Bauform in ein Gehäuse 19 integriert sein, wie dies in einem beispielhaften physischen Layout in **Fig. 2** dargestellt ist. In ein solches gemeinsames Gehäuse 19 können insbesondere der Batterieschutzschalter 10, die Steuereinrichtung 11, das Vorschaltgerät 13, die Schalteinrichtungen 171-173, die Energiespeicheranordnung 15 und das Batterieladegerät 16 integriert sein, wobei die so geschaffene, einheitliche Baugruppe vorzugsweise in unmittelbarer Nähe insbesondere zu der Anlagenbatterie 12 angeordnet ist.

Das Zuschalten genauso wie das Abschalten der Verbrauchergruppen VG1-VGn erfolgt vorzugsweise in zeitlich gestaffelter Weise, gesteuert über die Steuereinrichtung 2.

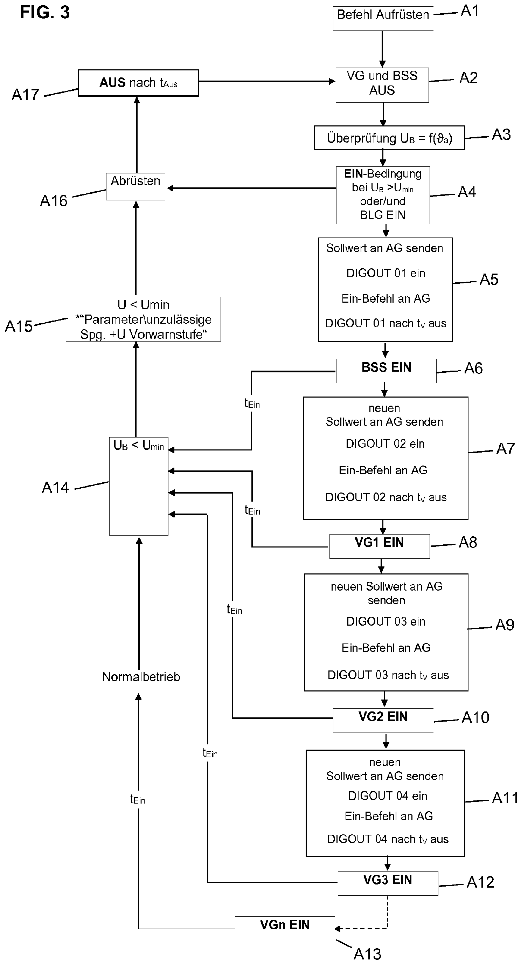

Ein Ablaufdiagramm zum Zuschalten von Verbrauchergruppen VG1-VGn soll nachfolgend anhand von **Fig. 3** erläutert werden.

Das Zuschalten von Verbrauchergruppen VG1-VGn wird beispielsweise durch einen Steuerbefehl zum sogenannten Aufrüsten (Schritt A1) ausgelöst, der beispielsweise von einem Zugführer des Schienenfahrzeugs bewirkt und über das externe Steuersystem 4 der Steuereinrichtung 11 zugeführt wird.

Liegt ein solcher Steuerbefehl zum Aufrüsten vor, so sind zunächst die Verbrauchergruppen VG1-VGn über die Schalteinrichtungen 171-174 abgeschaltet, und auch der Batterieschutzschalter 10 ist in seinem Aus-Zustand (Zustand A2).

Zum Aufrüsten wird zunächst der Batteriezustand zum Beispiel anhand der Batterietemperatur geprüft (Schritt A3), und sodann wird geprüft, ob an der Anlagenbatterie 12 ein hinreichendes Speisevermögen zum Zuschalten der Verbrauchergruppen VG1-VGn besteht (Schritt A4). Das Speisevermögen wird hierbei beispielsweise anhand eines Vergleichs der bestehenden Batteriespannung U_{B} mit einem Schwellwert Umin bewertet. Wenn die Batteriespannung U_{B} oberhalb des Schwellwerts Umin liegt, wird von einem hinreichenden Speisevermögen der Anlagenbatterie 12 ausgegangen. Es wird zudem davon ausgegangen, dass ein hinreichendes Speisevermögen besteht, wenn das Batterieladegerät 16 zugeschaltet und die Anlagenbatterie 12 somit gerade aufgeladen wird.

Ist in Schritt A4 festgestellt worden, dass das Speisevermögen der Anlagenbatterie 12 hinreichend ist, so sendet die Steuereinrichtung 11 einen Sollwert für den Schaltstrom zum Schalten des Batterieschutzschalters 10 an den Sollwertsteller 131 des Vorschaltgeräts 3. Anhand eines Signals DIGOUT 01 wird die Schaltbaugruppe 115 in Form des Binärschalters der Steuereinrichtung 11 aktiviert, und es wird ein Steuerbefehl zum Bereitstellen des Schaltstroms an die Leistungsstufe 133 des Vorschaltgeräts 13 gesendet (Schritt A5), sodass der Schaltstrom über die Schaltbaugruppe 115 dem Batterieschutzschalter 10 zugeführt und entsprechend der Batterieschutzschalter 10 von seinem Aus-Zustand in den Ein-Zustand geschaltet wird (Schritt A6). Nach einer vorbestimmten Zeit tᵥ wird die Schaltbaugruppe 115 wieder ausgeschaltet und der Schaltstrom somit nicht mehr zum Batterieschutzschalter 10 durchgeleitet. Diese vorbestimmte Zeit tᵥ ist so bemessen, dass der Batterieschutzschalter 10 zuverlässig geschaltet, aber nicht übermäßig belastet wird.

Ist der Batterieschutzschalter 10 eingeschaltet, so wird nach einer vorbestimmten Zeit tein wiederum anhand der Batteriespannung U_{B} geprüft, ob an der Anlagenbatterie 12 ein hinreichendes Speisevermögen vorliegt (Schritt A14). Ist dies der Fall, wird in Schritt A7 durch die Steuereinrichtung 11 ein neuer Sollwert für das Schalten der Schalteinrichtung 171 bestimmt und an das Vorschaltgerät 13 gesendet. Zudem wird über einen Steuerbefehl DIGOUT 02 die Schaltbaugruppe 115 in Form des Binärschalters eingeschaltet, ein Ein-Befehl an die Leistungsstufe 133 des Vorschaltgeräts 13 gesendet und somit der anhand des Sollwerts durch den Sollwertsteller 131 eingestellte Schaltstrom an die Schalteinrichtung 171 geleitet (Schritt A7), die somit schaltet und die Verbrauchergruppe VG1 zuschaltet (Schritt A8). Nach einer vorbestimmten Zeit tᵥ wird der Steuerbefehl DIGOUT 02 und somit der Schaltstrom abgeschaltet.

Vor Zuschalten der nächsten Verbrauchergruppe VG2 wird wiederum geprüft, ob die Batteriespannung U_{B} oberhalb des Schwellwerts Umin liegt (Schritt A14). Ist dies der Fall, wird in Schritt A9 durch die Steuereinrichtung 11 der Sollwert für das Schalten der Schalteinrichtung 172 bestimmt und an den Sollwertsteller 131 des Vorschaltgeräts 13 gesendet, die Schaltbaugruppe 115 in Form des Binärschalters mit einem Steuerbefehl DIGOUT 03 eingeschaltet und die Leistungsstufe 133 des Vorschaltgeräts 13 zum Erzeugen des Schaltstroms angesteuert. Die Schalteinrichtung 172 wird somit eingeschaltet und die Verbraucherbaugruppe VG2 zugeschaltet (Schritt A10). Nach einer vorbestimmten Zeit tᵥ wird wiederum der Steuerbefehl DIGOUT 03 und somit der Schaltstrom abgeschaltet.

Wiederum wird nunmehr geprüft, ob die Batteriespannung U_{B} oberhalb des Schwellwerts Umin liegt. Wenn dies der Fall ist, wird durch die Steuereinrichtung 11 ein Sollwert für das Schalten der Schalteinrichtung 173 erzeugt und an den Sollwertsteller 131 des Vorschaltgeräts 13 gesendet, die Schaltbaugruppe 115 mittels eines Steuerbefehls DIGOUT 04 eingeschaltet und die Leistungsstufe 133 des Vorschaltgeräts 13 zum Erzeugen des Schaltstroms anhand des eingestellten Sollwerts angesteuert (Schritt A11). Die Schalteinrichtung 173 wird somit eingeschaltet und damit die Verbrauchergruppe VG3 zugeschaltet (Schritt A12), und nach einer vorbestimmten Zeit tᵥ wird die Schaltbaugruppe 115 und somit der Schaltstrom wieder ausgeschaltet.

Sind weitere Verbrauchergruppen VGn vorhanden, können in gleicher Weise weitere Schalteinrichtungen 174 geschaltet werden (Schritt A13).

Sind die gewünschten Verbrauchergruppen VG1-VGn zugeschaltet, so wird im Normalbetrieb kontinuierlich oder in vorbestimmten zeitlichen Abständen geprüft, ob an der Anlagenbatterie 12 ein hinreichendes Speisevermögen vorliegt (Schritt A14). Ist dies der Fall, wird der Normalbetrieb fortgesetzt. Ist dies jedoch nicht der Fall (Schritt A15), so wird gegebenenfalls eine Prozedur zum Abrüsten eingeleitet, innerhalb derer die Verbrauchergruppen VG1-VGn wieder abgeschaltet werden (Schritte A16 und A17).

Über einen Einschaltstrombegrenzer kann der Schaltstrom jeweils so begrenzt werden, dass eine thermische oder magnetische Sicherungsfunktion des Batterieschutzschalters 10 oder der jeweiligen Schalteinrichtung 171-174 nicht auslöst und der Batterieschutzschalter 10 und die Schalteinrichtungen 171-174 somit zuverlässig geschaltet werden.

Das Zuschalten der Verbrauchergruppen VG1-VGn erfolgt somit in zeitlich gestaffelter Weise, indem der Batterieschutzschalter 10 und die Schalteinrichtungen 171-174 zeitlich nacheinander angesteuert werden. Das Zuschalten erfolgt hierbei unter wiederholter Kontrolle des Speisevermögens der Anlagenbatterie 12 anhand der bestehenden Batteriespannung U_{B}.

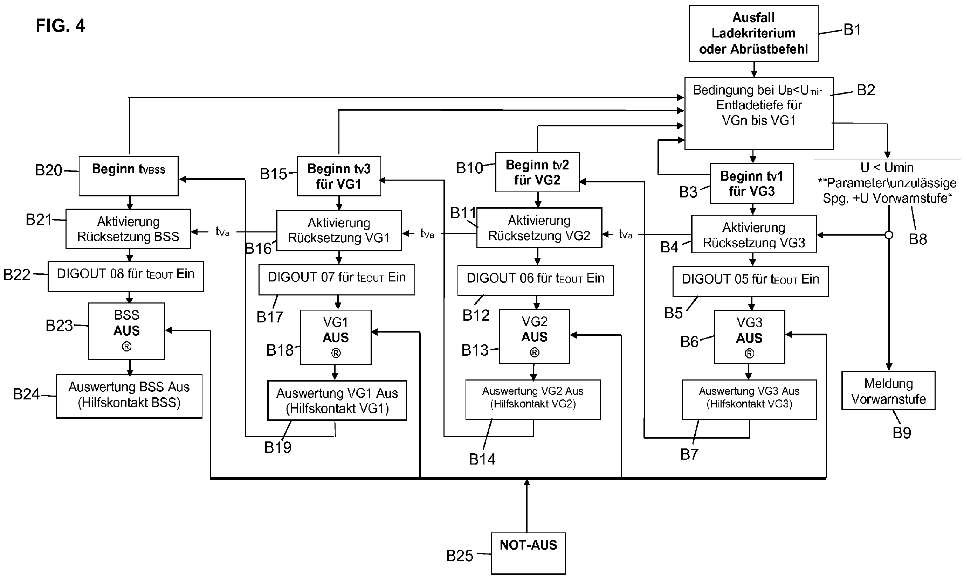

**Fig. 4** zeigt ein Ablaufdiagramm zum Abschalten von Verbrauchergruppen VG1-VGn in zeitlich gestaffelter Weise.

Das Abrüsten, also das Abschalten der Verbrauchergruppen VG1-VGn wird beispielsweise durch einen Abrüstbefehl, also zum Beispiel einen entsprechenden Steuerbefehl eines Zugführers, der der Steuereinrichtung 11 über das externe Steuersystem 4 zugeführt wird, oder bei Detektion eines unzureichenden Speisevermögens an der Anlagenbatterie 12 (Schritt A14 in Fig. 3) ausgelöst (Schritt B1 in Fig. 4). Liegt ein Kriterium zum Abrüsten vor, so werden die Verbrauchergruppen VG1-VGn beginnend mit der höchsten Komfortstufe (Verbrauchergruppe VGn) nacheinander abgeschaltet (mit Ausnahme einer Notabschaltung, bei der die Abschaltung gleichzeitig erfolgt (Schritt B25)).

Im Schritte B2 wird zunächst geprüft, ob die Anlagenbatterie 12 eine bestimmten Entladetiefe erreicht hat. Dies erfolgt insbesondere anhand einer Prüfung, ob die Batteriespannung U_{B} unterhalb eines vorbestimmten Schwellwerts Umin gefallen ist.

Weist die Anlagenbatterie 12 eine hinreichende Ladung und somit ein hinreichendes Speisevermögen auf, so kann generell das Abrüsten in zeitlich gestaffelter Weise mit vorbestimmten, anhand der Verbrauchergruppen VG1-VGn vorgegebenen zeitlichen Abständen tᵥ₁-tᵥ₃ und t_{vBSS} erfolgen. Beispielsweise kann erforderlich sein, dass grundsätzlich eine Verbrauchergruppe VG1-VGn bei Vorliegen eines Abrüstbefehls noch für einige Zeit, zum Beispiel einige Minuten oder auch einige Stunden, gespeist wird, um bestimmte Funktionen auszuführen.

Wird in Schritt B2 festgestellt, dass die Anlagenbatterie 12 kein hinreichendes Ladevermögen aufweist, weil die Batteriespannung U_{B} kleiner als der Schwellwert Umin ist, so kann eine Abschaltung der Verbrauchergruppen VG1-VG_{N} auch ohne zeitliche Verzögerung, also ohne Einhalten der vorbestimmten Zeiten tᵥ₁-tᵥ₃ und t_{vBSS} erfolgen.

In den Schritten B3 bis B7 werden die Verbrauchergruppe VG3 (in der Annahme, dass keine weiteren Verbrauchergruppen VGn vorhanden sind) abgeschaltet, indem nach einer vorbestimmten, zugeordneten Zeit tᵥ₁ (Schritt B3, sofern in Schritt B2 nicht festgestellt worden ist, dass die Batteriespannung U_{B} kleiner als der Schwellwert Umin ist) ein Schaltstrom zum Rücksetzen der Schalteinrichtung 173 über das Vorschaltgerät 13 erzeugt (Schritt B4) und über die Schaltbaugruppe 115 der Schalteinrichtung 173 zugeleitet wird (Schritt S5), sodass die Verbrauchergruppe VG3 abgeschaltet wird (Schritt B6). Das korrekte Abschalten wird in Schritt B7 überprüft.

Dies wird in den Schritten B10 bis B14 für die Verbrauchergruppe VG2, in den Schritten B15 bis B19 für die Verbrauchergruppe VG1 und in den Schritten B20 bis B24 für den Batterieschutzschalter 10 wiederholt, wobei die jeweilige Verzögerungszeit tᵥ₂, tᵥ₃, t_{vBSS} jeweils mit der Überprüfung des Abschaltens der vorherigen Verbrauchergruppe beginnt und eingehalten wird, sofern bei wiederholter Prüfung in Schritt B2 nicht festgestellt wird, dass die Batteriespannung U_{B} kleiner als der Schwellwert Umin ist.

Die vorbestimmten Zeiten tᵥ₁-tᵥ₃ und t_{vBSS} können gleich oder auch unterschiedlich sein. Genauso kann der Schwellwert Umin für die Überprüfung der Entladetiefe für die einzelenen Verbrauchergruppen VG1-VGn gleich oder auch unterschiedlich sein.

Nach der Abrüstprozedur sind sämtliche Schalteinrichtungen 171-174 und auch der Batterieschutzschalter 10 abgeschaltet, sodass die Verbrauchergruppen VG1-VGn nicht mehr an der Anlagenbatterie 12 anliegen.

Vor der Abschaltung der letzten Komfortstufe (Verbrauchergruppe VG1) oder auch bereits früher kann beispielsweise eine Vorwarnung in Form einer Meldung an das übergeordnete Steuersystem 4 für den Zugführer erzeugt werden (Schritt B9).

Im Falle eines Not-Aus (Schritt B25) kann die Abschaltung auch gleichzeitig erfolgen, sodass sämtliche Schalteinrichtungen 171-174 und der Batterieschutzschalter 10 gleichzeitig zum Trennen der Verbrauchergruppen VG1-VGn von der Anlagenbatterie 12 geschaltet werden.

Insbesondere im Falle eines Not-Aus ist auch eine Schnellabschaltung in zeitlich gestaffelter Weise, aber ohne Verwendung der vorbestimmten zeitlichen Abstände tᵥ₁-tᵥ₃ und t_{vBSS} möglich.

Auch nach der Abschaltung des Batterieschutzschalters 10 können Tiefentladezustände der Anlagenbatterie 12 oder Spannungsunterschiede zwischen Baugruppen entstehen (z.B. bei längeren Stillstandszeiten des Schienenfahrzeugs ohne Einspeisung). Die Steuereinrichtung 11 des Batteriemanagementsystems 1 ist zur Detektion solcher Zustände ausgebildet und leitet bei Detektion eines Tiefentladezustands eine Ausgleichsladung über das Batterieladegerät 16 ein.

Eine solche Ausgleichsladung erfordert über einen definierten Zeitraum, zum Beispiel einen Zeitraum zwischen 44 Stunden und 48 Stunden, einen Ladestrom mit vergleichsweise geringer Stromstärke, bezeichnet als I20, entsprechend einem Zwanzigstel des Nennstroms, um eine wirksame Aufladung der Anlagenbatterie 12 zu erreichen. Auf einen separaten Wandler zum Einspeisen der Ausgangsladung in die Anlagenbatterie 12 kann hierbei verzichtet werden.

Das Batterieladegerät 16 weist einen Steuereingang 161 auf, der eine Sollwertverstellung der Ausgangsspannung des Batterieladegerätes 16 über einen Analogausgang 116 der Steuereinrichtung 11 ermöglicht. Das Batterieladegerät 16 wird hierbei über die Schaltbaugruppe 115 in Form des Binärschalters der Steuereinrichtung 11, die mit einem digitalen Eingang 162 des Batterieladegeräte 16 verbunden ist, gesteuert, indem die Schaltbaugruppe 115 einen Umschaltbefehl für die Ausgleichsladung an das Batterieladegerät 16 sendet.

Bei der Steuerung des Ausgleichladevorgangs können hierbei auch Messwerte des Batteriestromsensors 100, des Batterietemperatursensors 121 und der über die Blockspannungsabgriffe 122 erhaltenen Blockspannung berücksichtigt werden. Der Ausgleichladevorgang wird über die Steuereinrichtung 11 gesteuert, die das Batterieladegerät 16 während des Ausgleichladevorgangs regelt und über das Datenbussystem 2 auch eine Meldung zum Beispiel an einen Zugführer absetzt, mittels derer der Zugführer beispielsweise zur Verbindung des Schienenfahrzeugs mit einer externen Stromversorgung zur Einspeisung externer Energie aufgefordert wird.

Nach einem erfolgten Ausgleichladevorgang erfolgt die Regelung der Anlagenspannung generell über das Batterieladegerät 16.

Die zusätzliche Energiespeicheranordnung 15 in Form einer Kondensatorbaugruppe, zum Beispiel unter Verwendung von sogenannten Superkondensatoren, dient dazu, im Falle einer extremen Tiefentladung der Anlagenbatterie 12, die gegebenenfalls auch zu einer Beschädigung an der Anlagenbatterie 12 führt, ein Notstartregime durchzuführen. Gesteuert über die Steuereinrichtung 11 wird hierzu die Energiespeicheranordnung 15 mit der Stromschienenanordnung 14 verbunden und somit aus Kondensatoren 155 der Energiespeicheranordnung 15 Energie in das System eingespeist. Das Einspeisen erfolgt über einen Rückspeisethyristor 153 und einen Einschaltstrombegrenzer 152 und wird gesteuert über eine Steuereinheit 151. Die Steuereinrichtung 11 steht insbesondere mit einem Schalter 154 der Energiespeicheranordnung 15 in Verbindung, der zum Zuschalten der Energiespeicheranordnung 15 an die Stromschienenanordnung 14 geschaltet wird.

Die Energiespeicheranordnung 15 kann beispielsweise so viel Energie zur Verfügung stellen, dass gewisse Notfunktionen ausgeführt werden können. Beispielsweise kann mit Energiespeicheranordnung 5. das Batterieladegerät 16 gestartet werden, um einen Ausgleichladevorgang für die Anlagenbatterie 12 zu initiieren.

Der Busanschluss 117 zum Verbinden mit dem Bussystem 2 einer Fahrzeugleitebene kann beispielsweise mit einem iCOM-System kompatibel sein. Über den Busanschluss 117 können Steuerbefehle empfangen werden. Zudem wird eine Systemkonfiguration ermöglicht.

Diagnosedaten können beispielsweise über die Drahtlosschnittstelle 118, ausgestaltet zum Beispiel durch eine RFID-Schnittstelle, ausgelesen werden. Über die Datenschnittstelle 118 kann ein Nutzer sich beispielsweise mittels eines Kommunikationsgeräts in Form eines Smartphones oder dergleichen mit der Steuereinrichtung 11 verbinden, um Diagnosedaten zur Wartung oder für die Reparatur auszulesen.

Die Steuereinrichtung 11 kann Messwerte unterschiedlicher Sensoren, insbesondere des Batteriestromsensors 100, des Anlagenstromsensors 140, des Batterietemperatursensors 121 und der Blockspannung erfassen und auswerten, um Lebensdauerprognosen der Anlagenbatterie 12 und anderer Baugruppen, insbesondere des Batterieschutzschalters 10 und der Schalteinrichtungen 171-174 zu erstellen. Darüber hinaus kann die Steuereinrichtung 11 Betriebsdaten des Batterieladegeräts 16 erfassen, was eine Berechnung der MTBF (Mean Time Between Failures) ermöglicht, um in der sogenannten RPA (Reliability Prediction Analysis) vorhergesagte Werte zu verifizieren.

Für die Batterielebensdauerprognose kann die Steuereinrichtung 11 zur Berechnung einer Brauchbarkeitsdauer Be = f(U_{BB}, ϑ_{Elyt}, n_{Zyc}, E_{N}, fₗ, tₐ) ausgebildet sein. Hierbei ist U_{BB} die Blockspannung, ϑElyt die Elektrolyttemperatur, n_{Zyc} die Anzahl der Zyklen, E_{N} der Nennenergiedurchsatz (batteriespezifischer Wert), fₗ das Vielfache des Entladestromes und ta die mittlere Betriebstemperatur. Die Zyklisierung bei einer Pufferbatterie in Hilfsbetriebeanlagen des Schienenfahrzeugbaus ist bezüglich der Entladetiefe unterschiedlich, so dass der Alterungsanteil der einzelnen Zyklen bei der Berechnung der Lebensdauer entsprechend bewertet werden muss. Die Berechnung wird in bestimmten Zeitabständen vorgenommen, wobei zwischen Kennlinienfeldern linear interpoliert wird. Mit jeder Neuberechnung wird die Genauigkeit der Lebensdauerprognose (quasi-) iterativ durch die sich aufsummierende Zyklenbewertung verbessert. Beim Erreichen einer vorgegebenen Lebensdauergrenze wird über das Bussystem 2 an das Fahrzeugleitsystem eine Fehlermeldung gesendet. Bereits vor dem Erreichen der Lebensdauergrenze wird ein Vorwarnsignal gesendet, so dass entsprechende Maßnahmen für die Prävention eingeleitet werden können.

Aus der Messung des Batteriestromes durch den Batteriestromsensor 100 und des Anlagenstroms durch den Anlagenstromsensor 140 kann auch eine Lebensdauerprognose für den Batterieschutzschalter 10 und die Schalteinrichtungen 171-174 erstellt werden. Hierzu wird durch die Steuereinrichtung 11 im Schaltmoment der jeweilige Schaltstrom des Batterieschutzschalters 10 bzw. der jeweiligen Schalteinrichtungen 171-174 ausgewertet, was eine Lebensdauerprognose für jeden dieser Schalter ermöglicht.

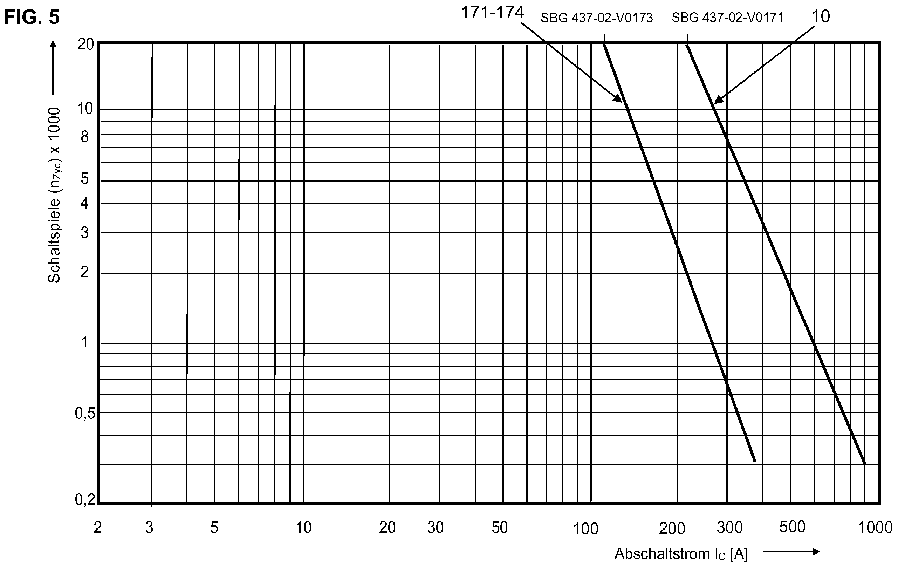

**Fig. 5** zeigt eine typische Kennlinie für den Batterieschutzschalter 10 und die Schalteinrichtung 171-174. Dargestellt ist in doppelt-logarhithmischer Weise die Lebensdauer, angegeben durch die Anzahl der Schaltspiele, in Abhängigkeit von dem Schaltstrom. Solche Kennlinien können beispielsweise durch Messreihen in Dauerversuchen ermittelt werden.

Zur Stellung einer Lebensdauerprognose für den Batterieschutzschalter 10 und die Schalteinrichtungen 171-174 werden Messwerte für den Schaltstrom beim Schalten durch die Steuereinrichtung 11 erfasst, so dass durch Schaltzyklenzählung (n_{Zyc}) mit einer entsprechenden Schaltstrombewertung eine Lebensdauerprognose berechnet werden kann. Beispielsweise kann anhand des erfassten Schaltstroms ein über die Gesamtzahl der Schaltzyklen mittlerer Schaltstrom ermittelt werden, um sodann anhand der Kennlinie eine geschätzte Lebensdauer, also eine insgesamt mögliche Anzahl von Schaltspielen, zu ermitteln. Auch in diesem Fall wird mit dem Erreichen des Lebensdauerendes eine Fehlermeldung generiert und über das Bussystem 2 an das Fahrzeugleitsystem gesendet.

Die aktuellen Lebensdauerprognosedaten können zu jeder Zeit über die (RFID-) Schnittstelle 118 abgerufen werden und stehen somit dem Betreiber für seine präventive Instandsetzungsplanung zur Verfügung.

Die Erfindung ist nicht auf die vorangehenden Ausführungsbeispiele beschränkt, sondern durch den Umfang der Ansprüche definiert.

Durch die batterienahe Installation des Batteriemanagementsystems mit Schalt- und Schutzfunktion ist eine Anordnung möglich, die eine schonende und überwachte Betriebsweise der Anlagenbatterie sowie eine effektive Energieverteilung zu Verbrauchergruppen bei gleichzeitiger Absicherung der Hauptverbrauchergruppen bei minimalem Verdrahtungsaufwand auf engstem Raum störsicher ermöglicht.

### BEZUGSZEICHENLISTE

- 1: Batteriemanagementsystem
- 10: Batterieschutzschalter
- 100: Batteriestromsensor
- 101, 102: Strompfad
- 11: Steuereinrichtung
- 111.1: Batteriestromerfassung
- 111.2: Erfassungseinrichtung für die Blockspannung
- 111.3: Erfassungseinrichtung des Anlagestroms
- 112: Prozessor
- 113: Steuereingang
- 114: Bustreiber
- 115: Schaltbaugruppe
- 116: Analogausgabe (0 ... 10 VDC)
- 117: Busanschluss
- 118: RFID-Schnittstelle
- 119: Systemverbindungseinrichtung
- 12: Anlagenbatterie
- 121: Batterietemperatursensor
- 122: Blockspannungsabgriffe
- 13: Vorschaltgerät
- 131: Sollwertsteller
- 132: Aktivierungsschaltung
- 133: Leistungsstufe
- 14: Stromschienenanordnung
- 140: Stromsensor
- 15: Energiespeicheranordnung (Kondensatorbaugruppe)
- 151: Steuereinheit
- 152: Einschaltstrombegrenzer
- 153: Rückspeisethyristor
- 154: Schalter
- 155: Kondensatoren
- 16: Batterieladegerät
- 161: Steuereingang
- 162: Digitaler Eingang
- 163: Einspeisung
- 17: Schaltungsanordnung
- 171-174: Schalteinrichtung
- 175-178: Strompfad
- 19: Gehäuse
- 2: Datenbussystem
- 3: Drahtlose Datenverbindung
- 4: Externes Steuersystem
- A1-A17: Schritte
- B1-B25: Schritte
- U_{B}: Batteriespannung
- VG1-VGn: Verbrauchergruppe

## Patentansprüche

1. Batteriemanagementsystem (1), insbesondere für ein Schienenfahrzeug, mit einer Anlagenbatterie (12), einer Stromschienenanordnung (14), einem Batterieschutzschalter (10) zum schaltbaren Verbinden der Anlagenbatterie (12) mit der Stromschienenanordnung (14) und zumindest einer Schalteinrichtung (171-174) zum schaltbaren Verbinden zumindest einer Verbrauchergruppe (VG1-VGn) mit der Stromschienenanordung (14),
**gekennzeichnet durch**
eine Steuereinrichtung (11) zum Steuern von Schaltvorgängen zum Schalten des Batterieschutzschalters (10) und der zumindest einen Schalteinrichtung (171-174) und ein einziges Vorschaltgerät (13) zum Erzeugen eines Schaltstroms zum Schalten des Batterieschutzschalters (10) und der zumindest einen Schalteinrichtung (171-174), wobei die Steuereinrichtung (11) ausgebildet ist, dem Vorschaltgerät (13) einen Sollwert für den Schaltstrom zum Schalten des Batterieschutzschalters (10) oder der zumindest einen Schalteinrichtung (171-174) bereitzustellen,
wobei die Steuereinrichtung (11) ausgebildet ist, einen ersten Sollwert für einen Schaltstrom zum Schalten des Batterieschutzschalters (10) und einen zweiten Sollwert für einen Schaltstrom zum Schalten der zumindest einen Schalteinrichtung (171-174) zu übertragen,
wobei das Vorschaltgerät (13) einen Sollwertsteller (131) zum Einstellen des Schaltstroms in Abhängigkeit von dem von der Steuereinrichtung (11) empfangenen Sollwert aufweist und
wobei die Steuereinrichtung (11) ausgebildet ist, mehrere Schaltelemente (115) anzusteuern, welche die Verteilung der von dem Vorschaltgerät (13) gelieferten, der jeweiligen Schalteinrichtung (171-174) angepaßten Schaltströme auf die jeweils anzusteuernden Schalteinrichtungen (171-174) vornehmen.

2. Batteriemanagementsystem (1) nach Anspruch 1, **dadurch gekennzeichnet, dass** das Vorschaltgerät (13) eine Leistungsstufe (133) zum Erzeugen des Schaltstroms zum Schalten des Batterieschutzschalters (10) und der zumindest einen Schalteinrichtung (171-174) aufweist.

3. Batteriemanagementsystem (1) nach einem der vorangehenden Ansprüche, **dadurch gekennzeichnet, dass** die Steuereinrichtung (11), das Vorschaltgerät (13),
der Batterieschutzschalter (10) und die zumindest eine Schalteinrichtung (171-174) in einem gemeinsamen Gehäuse (19) angeordnet sind.

4. Batteriemanagementsystem (1) nach einem der vorangehenden Ansprüche, **dadurch gekennzeichnet, dass** die Steuereinrichtung (11) ausgebildet ist, einen Schaltvorgang zum Schalten des Batterieschutzschalters (10) oder der zumindest einen Schalteinrichtung (171-174) in Abhängigkeit von einem Ladezustand der Anlagenbatterie (12) auszulösen.

5. Batteriemanagementsystem (1) nach einem der vorangehenden Ansprüche, **gekennzeichnet durch** einen Batteriestromsensor (100) zum Messen eines Stromflusses zwischen der Anlagenbatterie (12) und der Stormschienenanordnung (14).

6. Batteriemanagementsystem (1) nach Anspruch 5, **dadurch gekennzeichnet, dass** die Steuereinrichtung (11) ausgebildet ist, Schaltvorgänge des Batterieschutzschalters (10) und/oder der zumindest einen Schalteinrichtung (171-174) anhand von den Schaltvorgängen zugeordneten Messwerten des Batteriestromsensors (100) zur Ermittlung eines für die Lebensdauer des Batterieschutzschalters (10) und/oder der zumindest einen Schalteinrichtung (171-174) indikativen Kennwerts auszuwerten.

7. Batteriemanagementsystem (1) nach Anspruch 6, **dadurch gekennzeichnet, dass** die Steuereinrichtung (11) ausgebildet, zusätzlich zu den Messwerten des Batteriestromsensors (100) Messwerte eines Anlagenstromsensors (140), der zum Messen eines Stromflusses an der Stromschienenanordnung (14) angeordnet ist, zur Ermittlung des für die Lebensdauer des Batterieschutzschalters (10) und/oder der zumindest einen Schalteinrichtung (171-174) indikativen Kennwerts auszuwerten

8. Batteriemanagementsystem (1) nach einem der vorangehenden Ansprüche, **dadurch gekennzeichnet, dass** der Batterieschutzschalter (10) zweipolig zum Schalten von zwei Strompfaden (101, 102), über die die Anlagenbatterie (12) mit der Stromschienenanordung (14) verbindbar ist, ausgebildet ist.

9. Batteriemanagementsystem (1) nach einem der vorangehenden Ansprüche, **dadurch gekennzeichnet, dass** der Batterieschutzschalter (10) zwei stabile Schaltzustände aufweist.

10. Batteriemanagementsystem (1) nach einem der vorangehenden Ansprüche, **dadurch gekennzeichnet, dass** die zumindest eine Schalteinrichtung (171-174) einpolig zum Schalten von einem Strompfad (175-178), über die die zumindest eine Verbrauchergruppe (VG1-VGn) mit der Stromschienenanordnung (14) verbindbar ist, ausgebildet ist.

11. Batteriemanagementsystem (1) nach einem der vorangehenden Ansprüche, **dadurch gekennzeichnet, dass** die zumindest eine Schalteinrichtung (171-174) zwei stabile Schaltzustände aufweist.

12. Batteriemanagementsystem (1) nach einem der vorangehenden Ansprüche, **dadurch gekennzeichnet, dass** der Batterieschutzschalter (10) und/oder die zumindest eine Schalteinrichtung (171-174) eine thermische und/oder magnetische Sicherungsfunktion aufweisen.

13. Batteriemanagementsystem (1) nach einem der vorangehenden Ansprüche, **gekennzeichnet durch** ein mit der Stromschienenanordnung (14) verbundenes Batterieladegerät (16) zum Aufladen der Anlagenbatterie (12), wobei die Steuereinrichtung (11) ausgebildet ist, das Batterieladegerät (16) in Abhängigkeit eines Ladezustands der Anlagenbatterie (12) zu steuern.

14. Batteriemanagementsystem (1) nach einem der vorangehenden Ansprüche, **gekennzeichnet durch** eine mit der Stromschienenanordnung (14) verbundene, zusätzliche Energiespeicheranordnung (15) zum Bereitstellen elektrischer Energie in einem Tiefentladungszustand der Anlagenbatterie (12), wobei die Steuereinrichtung (11) ausgebildet ist, die Energiespeicheranordnung (15) zu steuern.

15. Batteriemanagementsystem (1) nach einem der vorangehenden Ansprüche, **dadurch gekennzeichnet, dass** das Batteriemanagementsystem (1) eine Mehrzahl von Schalteinrichtungen (171-174) zum schaltbaren Verbinden einer Mehrzahl von Verbrauchergruppen (VG1-VGn) mit der Stromschienenanordung (14) aufweist.

## Claims

1. Battery management system (1), in particular for a rail vehicle, comprising an installation battery (12), a busbar arrangement (14), a battery circuit breaker (10) for switchably connecting the installation battery (12) to the busbar arrangement (14), and at least one switching apparatus (171-174) for switchably connecting at least one load group (VG1-VGn) to the busbar arrangement (14),
**characterized by**
a control apparatus (11) for controlling switching operations for switching the battery circuit breaker (10) and the at least one switching apparatus (171-174), and a single ballast (13) for generating a switching current for switching the battery circuit breaker (10) and the at least one switching apparatus (171-174), wherein the control apparatus (11) is configured to provide the ballast (13) with a setpoint value for the switching current for switching the battery circuit breaker (10) or the at least one switching apparatus (171-174), wherein the control apparatus (11) is configured to transmit a first setpoint value for a switching current for switching the battery circuit breaker (10) and a second setpoint value for a switching current for switching the at least one switching apparatus (171-174), wherein the ballast (13) has a setpoint value adjuster (131) for adjusting the switching current depending on the setpoint value received from the control apparatus (11), and
wherein the control apparatus (11) is configured to actuate a plurality of switching elements (115) that distribute the switching currents, wherein the switching currents are delivered by the ballast (13) and adapted to the respective switching apparatus (171-174), among the respective switching apparatuses (171-174) to be actuated.

2. Battery management system (1) according to Claim 1, **characterized in that** the ballast (13) has a power stage (133) for generating the switching current for switching the battery circuit breaker (10) and the at least one switching apparatus (171-174).

3. Battery management system (1) according to one of the preceding claims, **characterized in that** the control apparatus (11), the ballast (13), the battery circuit breaker (10) and the at least one switching apparatus (171-174) are arranged in a common housing (19).

4. Battery management system (1) according to one of the preceding claims, **characterized in that** the control apparatus (11) is configured to trigger a switching operation for switching the battery circuit breaker (10) or the at least one switching apparatus (171-174) depending on a state of charge of the installation battery (12).

5. Battery management system (1) according to one of the preceding claims, **characterized by** a battery current sensor (100) for measuring a flow of current between the installation battery (12) and the busbar arrangement (14) .

6. Battery management system (1) according to claim 5, **characterized in that** the control apparatus (11) is configured to evaluate switching operations of the battery circuit breaker (10) and/or of the at least one switching apparatus (171-174) on the basis of measurement values of the battery current sensor (100), wherein the measurement values are associated with the switching operations, in order to ascertain a characteristic value indicative of the service life of the battery circuit breaker (10) and/or of the at least one switching apparatus (171-174).

7. Battery management system (1) according to claim 6, **characterized in that** the control apparatus (11) is configured to evaluate, in addition to the measurement values of the battery current sensor (100), measurement values of a system current sensor (140), wherein the system current sensor (140) is arranged on the busbar arrangement (14) to measure a flow of current, in order to ascertain the characteristic value indicative of the service life of the battery circuit breaker (10) and/or of the at least one switching apparatus (171-174).

8. Battery management system (1) according to one of the preceding claims, **characterized in that** the battery circuit breaker (10) has a two-pole design for switching two current paths (101, 102), via which the installation battery (12) can be connected to the busbar arrangement (14) .

9. Battery management system (1) according to one of the preceding claims, **characterized in that** the battery circuit breaker (10) has two stable switching states.

10. Battery management system (1) according to one of the preceding claims, **characterized in that** the at least one switching apparatus (171-174) has a single-pole design for switching one current path (175-178), via which the at least one load group (VG1-VGn) can be connected to the busbar arrangement (14).

11. Battery management system (1) according to one of the preceding claims, **characterized in that** the at least one switching apparatus (171-174) has two stable switching states.

12. Battery management system (1) according to one of the preceding claims, **characterized in that** the battery circuit breaker (10) and/or the at least one switching apparatus (171-174) have a thermal and/or magnetic fuse function.

13. Battery management system (1) according to one of the preceding claims, **characterized by** a battery charging device (16), which is connected to the busbar arrangement (14), for charging the installation battery (12), wherein the control apparatus (11) is designed to control the battery charging device (16) depending on a state of charge of the installation battery (12).

14. Battery management system (1) according to one of the preceding claims, **characterized by** an additional energy storage arrangement (15), which is connected to the busbar arrangement (14), for providing electrical energy in a deep discharge state of the installation battery (12), wherein the control apparatus (11) is designed to control the energy storage arrangement (15).

15. Battery management system (1) according to one of the preceding claims, **characterized in that** the battery management system (1) has a plurality of switching apparatuses (171-174) for switchably connecting a plurality of load groups (VG1-VGn) to the busbar arrangement (14).

## Revendications

1. Système de gestion de batterie (1), notamment pour un véhicule ferroviaire, comprenant une batterie d'équipement (12), un arrangement de barres-bus (14), un disjoncteur de batterie (10) servant à la connexion commutable de la batterie d'équipement (12) à l'arrangement de barres-bus (14) et au moins un dispositif de commutation (171-174) servant à la connexion commutable d'au moins un groupe de récepteurs (VG1-VGn) à l'arrangement de barres-bus (14),
**caractérisé par**
un dispositif de commande (11) destiné à commander des opérations de commutation pour commuter le disjoncteur de batterie (10) et l'au moins un dispositif de commutation (171-174) et un régulateur de puissance (13) unique destiné à générer un courant de commutation servant à la commutation du disjoncteur de batterie (10) et de l'au moins un dispositif de commutation (171-174), le dispositif de commande (11) étant configuré pour fournir au régulateur de puissance (13) une valeur de consigne pour le courant de commutation servant à la commutation du disjoncteur de batterie (10) ou de l'au moins un dispositif de commutation (171-174),
le dispositif de commande (11) étant configuré pour transmettre une première valeur de consigne pour un courant de commutation servant à la commutation du disjoncteur de batterie (10) et une deuxième valeur de consigne pour un courant de commutation servant à la commutation de l'au moins un dispositif de commutation (171-174),
le régulateur de puissance (13) possédant un élément de réglage de valeur de consigne (131) destiné à régler le courant de commutation en fonction de la valeur de consigne reçue par le dispositif de commande (11) et
le dispositif de commande (11) étant configuré pour commander plusieurs éléments de commutation (115), lesquels effectuent la distribution des courants de commutation délivrés par le régulateur de puissance (13), adaptés au dispositif de commutation (171-174) respectif, sur les dispositifs de commutation (171-174) à commander.

2. Système de gestion de batterie (1) selon la revendication 1, **caractérisé en ce que** le régulateur de puissance (13) possède un étage de puissance (133) destiné à générer le courant de commutation servant à la commutation du disjoncteur de batterie (10) et de l'au moins un dispositif de commutation (171-174).

3. Système de gestion de batterie (1) selon l'une des revendications précédentes, **caractérisé en ce que** le dispositif de commande (11), le régulateur de puissance (13), le disjoncteur de batterie (10) et l'au moins un dispositif de commutation (171-174) sont disposés dans un boîtier (19) commun.

4. Système de gestion de batterie (1) selon l'une des revendications précédentes, **caractérisé en ce que** le dispositif de commande (11) est configuré pour déclencher une opération de commutation destinée à la commutation du disjoncteur de batterie (10) ou de l'au moins un dispositif de commutation (171-174) en fonction d'un état de charge de la batterie d'équipement (12).

5. Système de gestion de batterie (1) selon l'une des revendications précédentes, **caractérisé par** un capteur de courant de batterie (100) destiné à mesurer un flux de courant entre la batterie d'équipement (12) et l'arrangement de barres-bus (14).

6. Système de gestion de batterie (1) selon la revendication 5, **caractérisé en ce que** le dispositif de commande (11) est configuré pour interpréter les opérations de commutation du disjoncteur de batterie (10) et/ou de l'au moins un dispositif de commutation (171-174) à l'aide de valeurs mesurées du capteur de courant de batterie (100) associées aux opérations de commutation en vue de déterminer une valeur caractéristique indicative de la durée de vie du disjoncteur de batterie (10) et/ou de l'au moins un dispositif de commutation (171-174).

7. Système de gestion de batterie (1) selon la revendication 6, **caractérisé en ce que** le dispositif de commande (11) est configuré pour, en plus des valeurs mesurées du capteur de courant de batterie (100), interpréter les valeurs mesurées d'un capteur de courant d'équipement (140), lequel est disposé pour mesurer un flux de courant sur l'arrangement de barres-bus (14), en vue de déterminer la valeur caractéristique indicative de la durée de vie du disjoncteur de batterie (10) et/ou de l'au moins un dispositif de commutation (171-174).

8. Système de gestion de batterie (1) selon l'une des revendications précédentes, **caractérisé en ce que** le disjoncteur de batterie (10) est de configuration bipolaire pour la commutation de deux trajets de courant (101, 102), par le biais desquels la batterie d'équipement (12) peut être connectée à l'arrangement de barres-bus (14).

9. Système de gestion de batterie (1) selon l'une des revendications précédentes, **caractérisé en ce que** le disjoncteur de batterie (10) possède deux états de commutation stables.

10. Système de gestion de batterie (1) selon l'une des revendications précédentes, **caractérisé en ce que** l'au moins un dispositif de commutation (171-174) est de configuration unipolaire pour la commutation d'un trajet de courant (175-178), par le biais duquel l'au moins un groupe de récepteurs (VG1-VGn) peut être connecté à l'arrangement de barres-bus (14).

11. Système de gestion de batterie (1) selon l'une des revendications précédentes, **caractérisé en ce que** l'au moins un dispositif de commutation (171-174) possède deux états de commutation stables.

12. Système de gestion de batterie (1) selon l'une des revendications précédentes, **caractérisé en ce que** le disjoncteur de batterie (10) et/ou l'au moins un dispositif de commutation (171-174) possèdent une fonction de sécurité thermique et/ou magnétique.

13. Système de gestion de batterie (1) selon l'une des revendications précédentes, **caractérisé par** un chargeur de batterie (16) connecté à l'arrangement de barres-bus (14) et destiné à charger la batterie d'équipement (12), le dispositif de commande (11) étant configuré pour commander le chargeur de batterie (16) en fonction de l'état de charge de la batterie d'équipement (12).

14. Système de gestion de batterie (1) selon l'une des revendications précédentes, **caractérisé par** un arrangement d'accumulation d'énergie (15) supplémentaire, connecté à l'arrangement de barres-bus (14), destiné à fournir de l'énergie électrique dans un état de décharge profonde de la batterie d'équipement (12), le dispositif de commande (11) étant configuré pour commander l'arrangement d'accumulation d'énergie (15).

15. Système de gestion de batterie (1) selon l'une des revendications précédentes, **caractérisé en ce que** le système de gestion de batterie (1) possède une pluralité de dispositifs de commutation (171-174) servant à la connexion commutable d'une pluralité de groupes de récepteurs (VG1-VGn) à l'arrangement de barres-bus (14).
